# EUROPÄISCHE PATENTSCHRIFT

(11) **EP 0 676 337 B1**
(45) Veröffentlichungstag und Bekanntmachung des Hinweises auf die Patenterteilung: **02.01.1997**
(21) Anmeldenummer: 94250087.7
(22) Anmeldetag: 05.04.1994
(51) Int. Cl.: B65D 30/08

(54) **Mehrzweck-Versandtasche**
Multi-purpose mailing envelope
Sachet d'envoi postal à usages multiples

(43) Veröffentlichungstag der Anmeldung: 11.10.1995
(73) Patentinhaber: NEDERLANDSE PILLO-PAK MAATSCHAPPIJ B.V., 6961 EC Eerbeek (NL)
(72) Erfinder: Hoogerwoord, Ronald Patrick, NL-6961 DH Eerbeek (NL)
(74) Vertreter: Meys, Hildegard, Dr.rer.nat.

(56) Entgegenhaltungen:
- DE-A- 2 836 867
- DE-A- 2 852 826
- DE-U- 7 338 621
- US-A- 3 274 091

## Beschreibung

Die Erfindung betrifft eine Mehrzweck-Versandtasche, die aus einer Aussenhülle aus im wesentlichen unflexiblem Material, wie Papier, Karton oder dergleichen, und einer Polsterung aus flexiblem Kunststoffmaterial, wie Kunststoff-Schaumstoff oder Luftpolsterfolie (LP-Folie), oder auch glatter Kunststoff-Folie besteht.

Bei den bekannten in der Praxis hervorragend bewährten Mehrzweck-Versandtaschen dieser Art, wie beispielsweise in dem deutschen Gebrauchsmuster Nr. 73 38 621 der Anmelderin beschrieben, sind die Aussenhülle und die Polsterung miteinander fest verbunden, zum Beispiel vollflächig oder randseitig verhaftet, verklebt oder - vorteilhaft - randseitig verschweisst. Sie bilden ein vollflächiges oder teilflächiges Laminat.
Trotz ihrer sehr guten Gebrauchseigenschaften als Verpackungs- und Versandhilfe ist eine solche bekannte Lamitnat-Tasche im Hinblick auf die heutzutage angestrebte Wiederverwendung der Rohstoffe nach der Benutzung unvorteilhaft. Infolge der festen Verbindung der von Natur aus unterschiedlichen Materialien, biologisch abbaubarer Papierstoff der Aussenhülle einerseits und Kunststoffmaterial der Polsterung und gegebenenfalls der Beschichtung der Aussenhülle andererseits, deren Trennung - falls überhaupt möglich - mit technisch aufwendigen Massnahmen vorgenommen werden muss, entstehen aus heutiger Sicht unerwünschte Probleme bei der erforderlichen Abfallbeseitigung bzw. -aufarbeitung.

Es ist aus der DE-A-2852826 bereits eine flüssigkeitsundurchlässige Kunststoff-Tasche mit einer Papier-Tasche als Aussenumhüllung bekannt, wobei die Kunststoff-Tasche vorzugsweise lose in die Papier-Tasche eingeschoben ist. Dabei kommen die materialbedingt hydrophilen Innenflächen der Aussenumhüllung gegen die materialbedingt hydrophoben Aussenflächen der Innen Kunststoff-Tasche zu liegen.

Wenn solche bekannten Kombinationen einer Flachtasche oder auch einer Kunststoff-Polstertasche der bekannten Art als Innenhülle mit einer Aussenhülle aus unbeschichtetem Papierstoff oder sonstigem biologisch abbaubarem Material, das materialbedingt hydrophil ist, ohne Befestigung miteinander, als einfach ineinander eingelegte Kombination gestaltet werden, müssen die Aussenabmessungen der Innenhülle mehr oder weniger kürzer und schmäler bemessen sein als die Innenabmessungen der Aussenhülle. Diese notwendige Toleranz bewirkt, dass im rauhen Verpackungsbetrieb die Gefahr des Verrutschens und schlimmstenfalls des Herausgleitens der Innenhülle aus der Aussenhülle besteht. Diese Gefahr ist erst dann behoben, wenn der Verpackungsvorgang beendet ist und die Einfüll-Öffnung der Innentasche verschlossen ist. Die Gefahr des Auseinanderrutschens der kombinierten Aussen- und Innenhüllen wird erhöht, wenn in der Zeit zwischen Herstellung und Verwendung, bei der Lagerung der insbesondere Polstertaschen, die klimatischen Verhältnisse der Umgebungsatmosphäre eine hohe Luftfeuchtigkeit bedingen. Der Papierstoff, aus dem die Aussenhüllen bestehen und der von Natur aus hydrophil ist, ist befähigt, Feuchtigkeit aus der Umgebungsatmosphäre aufzunehmen und abzugeben. Dagegen verbleibt die Feuchtigkeit bei dem Kunststoffmaterial, aus dem die Innenhüllen bestehen, und das ein hydrophobes Material ist, als Oberflächenfilm auf der Kunststoffoberfläche, wenn sie den Papierstoff durchdringt, und verstärkt dadurch den Rutscheffekt der Innenhülle aus der Aussenhülle, wenn ein solcher Film sich auf der Oberfläche der Innenhülle zu bilden und/oder auszubreiten vermag. Da einem eventuellen Durchtritt von Feuchtigkeit durch das hydrophile Papierstoff-Material der Aussenhülle auf die Oberfläche der Innenhülle kein Widerstand entgegensteht, ist diese Gefahr insbesondere bei längerer Lagerung der auf Vorrat gehaltenen Versandtaschen akut.

Diese Gefahr wirkt sich insbesondere dann störend aus, wenn die Polstertaschen maschinell befüllt werden sollen. Durch Rutscheffekte ergeben sich beim maschinellen Befüllen störende und nicht tolerierbare Verfahrensunterbrechungen.

Der Erfindung liegt die Aufgabe zugrunde, eine Mehrzweck-Versandtasche zu schaffen, die ausgehend vom Oberbegriff des Anspruchs 1 unter Beibehaltung der guten Gebrauchseigenschaften von gepolsterten Versandtaschen die ökologischen Nachteile der Laminat-Taschen vermeidet.

Diese Aufgabe wird erfindungsgemäss durch die im Kennzeichen des Anspruchs 1 angegebenen Merkmale gelöst, wobei in den Unteransprüchen 2 bis 8 noch zweckmässige und vorteilhafte Ausgestaltungen der Erfindung beansprucht werden.

Es werden zum Zwecke des Vermeidens des Verrutschens der Innenhülle gegenüber der Aussenhülle insbesondere während der Befüllung der Versandtasche erfindungsgemäss die der Aussentasche zugewandten Aussenseiten der Innenhülle hydrophil eingestellt. Es wurde gefunden, dass die zuvor beschriebenen Schwierigkeiten nicht auftreten, wenn bei der erfindungsgmässen Mehrzweck-Versandtasche die zu der Aussenhülle hin gelegenen Oberflächen der Innenhülle ihrerseits hydrophil eingestellt sind. Dann bildet sich zwischen der entsprechend den Innenabmessungen der Aussenhülle schmäler und kürzer dimensionierten Innenhülle und der Ausenhülle eine Art Adhäsionshaftung aus, die auch bei längerer Lagerung und unter ungünstiger, hoch-feuchtigkeitshaltiger Umgebungsatmosphäre erhalten bleibt. Dies ist besonders vorteilhaft, wenn als Kunststoff-Folie für die Innenhülle LP-Folie eingesetzt wird. Bekanntlich wird mit LP-Folien (Luftpolster-Folien) ein sehr guter Polstereffekt bei Mehrzweck-Versandtaschen erzielt. LP-Folien sind Kunststoff-Folien, deren eine Oberseite glatt und deren andere Oberseite eine genoppte Fläche ist, wobei die Aussenflächen der Noppenböden der genoppten Fläche zweckmässig zur Innenfläche der Aussenhülle hin gelegen ausgerichtet sind. Eine gute Adhäsionshaftung der erfindungsgemäss hydrophil eingestellten Aussenflächen der Noppenböden ist besonders vorteilhaft.

Es ist bekannt, dass Kunststoffoberflächen durch verschiedene Massnahmen, insbesondere durch Coronabehandlung, aufgerauht werden können, um sie besser aufnahmefähig für Beschichtungen wie Klebstoff- und/oder Druckfarbenauftrag zu machen. In Art dieser bekannten Methoden lässt sich, wie gefunden wurde, die Oberfläche der die Innenhüllen erfindungsgemässer Mehrzweck-Polstertaschen bildenden Kunststoff-Folie, wie LP-Folie oder Schaumstoff-Folie, behandeln, um diese ihrer Natur nach hydrophoben Flächen hydrophil einzustellen.

Es ist bekannt, eine solche Coronabehandlung in einer Gasatmosphäre vorzunehmen, die mit Dämpfen organischer Agentien, wie Acrylsäure und Maleinsäure, gesättigt ist. Man kann auch andere aliphatische Säuren in der Dampfform bei der Coronabehandlung zur Hydrophobierung einsetzen. Ein solches bekanntes Verfahren, das für die erfindungsgemässen Zwecke dienlich ist, wird beispielsweise in der US-PS 3.274.091 beschrieben. Man kann auch, wie gefunden wurde, eine solche Coronabehandlung zur Hydrophilierung der Kunststoff-Oberfläche unter Zuführung eines Gasgemisches aus Stickstoff und Glykoldampf, vorteilhaft im Mischungsverhältnis von 60 - 90 Vol% N₂ zu 40 - 10 Vol.% Glykoldampf, vorsehen.

Verfahren und Vorrichtungen zur Durchführung einer solchen gasgespeisten Coronabehandlung sind aus dem Stand der Technik zu entnehmen. Speziell LP-Folien lassen sich vorteilhaft nach einem Verfahren und mit einer Vorrichtung coronabehandeln, wie sie in der DE-OS 28 36 867 beschrieben sind.

Diese Hydrophilier-Behandlung der die Innenhüllen erfindungsgemässer Mehrzweck-Versandtaschen bildenden Folienoberflächen wird vorteilhaft unmittelbar vor dem Zusammenbringen von Aussenhülle und Innenhülle bei der Fertigung der Versandtaschen vorgenommen. Dazu kann es zweckmässig sein, wegen optimaler Positionierung bei der Taschenherstellung mit hohen Maschinengeschwindigkeiten einzelne Haftpunkte am Papiermaterial mit einfachen Haftmitteln vorzusehen. Da Papiermaterial saugfähig ist, verbleiben und verschwinden solche Haftmittelpunkte im Papier. Es ist dadurch weder der lose Sitz der Innentasche in der Aussenhülle beeinträchtigt, noch ist dadurch die Entsorgung und/oder Aufbereitung der Papiermasse gestört, denn es handelt sich um ohnehin im Papierstoff vorhandene bzw. damit verträgliche Stoffe, wie sie beispielsweise für die Randverklebung der Aussenhülle benutzt werden bzw. benutzt werden können.

Es kann je nach der Natur des Materials für die Aussenhüllen gewünschtenfalls vorteilhaft sein, auch die Hydrophilierung der Innenflächen der Aussenhülle zusätzlich vorzusehen. Dazu kann man übliche Hydrophiliermittel als Tränkmittel einsetzen, oder man kann das Material für die Aussenhülle ebenso wie das Material für die Innenhülle - wie zuvor angegeben - einer Coronabehandlung unterziehen.

Erfindungsgemässe Mehrzweck-Versandtaschen lassen sich beliebig lange lagern und in jedem Fall ohne Schwierigkeiten befüllen. Nach der Benutzung lassen sie sich leicht und materialgerecht entsorgen. Durch einfache mechanische Trennung, zum Beispiel von hand, lässt sich die aus Kunststoffmaterial bestehende Innenhülle herausnehmen. Es verbleiben keinerlei Materialreste, weder Papierreste an der Innenhülle, noch Kunststoffreste an der Aussenhülle, haften. Die unterschiedlichen Papiermaterialien einerseits und Kunststoffmaterialien andererseits können ohne zusätzliche aufwendige Reinigungsmassnahmen, so wie sie anfallen, artgerecht entsorgt werden.

## Patentansprüche

1. Mehrzweck-Versandtasche, bestehend aus Aussentasche aus zwei übereinander liegenden an den Seitenlängsrändern und einem Seitenquerrand miteinander fest verbundenen Aussenlagen aus biologisch abbaubarem Material als Aussenhülle, deren Innenfläche Kunststoffunbeschichtet und materialbedingt hydrophil ist, und zwischen den Aussenlagen angeordneten Versteifungsschichten aus weichelastischem Kunststoffmaterial, die zu einer selbständigen Innenhülle miteinander fest verbunden sind, die lose in der Aussenhülle sitzt, dadurch gekennzeichnet, dass die gegen die materialbedingt hydrophilen Innenflächen der Aussenhülle gelegenen Aussenflächen der Innenhülle hydrophil eingestellt sind.

2. Mehrzweck-Versandtasche nach Anspruch 1, bestehend aus der Kombination einer Aussenhülle aus Papierstoff und einer unbefestigt darin angeordneten Innenhülle aus Kunststoffpolstermaterial, dadurch gekennzeichnet, dass das Kunststoffpolstermaterial auf seiner die Aussenseite der Innenhülle bildenden Oberfläche hydrophil eingestellt ist.

3. Mehrzweck-Versandtasche nach Anspruch 2, dadurch gekennzeichnet, dass als Kunststoffpolstermaterial Luftpolsterfolie vorhanden ist, deren glatte Fläche die Innenseite der Innenhülle und deren genoppte Fläche die Aussenseite der Innenhülle bilden, die hydrophil eingestellt ist.

4. Mehrzweck-Versandtasche nach Anspruch 3, dadurch gekennzeichnet, dass nur die Aussenfläche der Noppenböden hydrophil eingestellt ist.

5. Mehrzweck-Versandtasche nach Anspruch 2, dadurch gekennzeichnet, dass als Kunststoffpolstermaterial, aus welchem die Innenhülle gebildet ist, Schaumstoff-Folie vorhanden ist, und deren die Aussenseite der Innenhülle bildende Oberfläche hydrophil eingestellt ist.

6. Mehrzweck-Versandtasche nach Anspruch 1 bis 5, dadurch gekennzeichnet, dass auch die die Innenseite der Aussenhülle bildende Oberfläche des Aussenhüllenmaterials hydrophilisiert ist.

7. Mehrzweck-Versandtasche nach Anpruch 1 bis 6, dadurch gekennzeichnet, dass die Hydrophilisierung der Oberflächen durch Coronabehandlung erfolgt ist.

8. Mehrzweck-Versandtasche nach Anspruch 7, dadurch gekennzeichnet, dass die Hydrophilisierung der Oberflächen durch unter Zuführung eines aus Stickstoff und Glykoldampf bestehenden Gasgemisches vorgenommene Coronabehandlung erfolgt ist.

## Claims

1. Multipurpose mailing envelope, consisting of an outer envelope of two outer layers of biodegradable material as an outer jacket which are securely joined to one another and which lie on top of one another along long side edges and one transverse side edge, and with an inside surface which is free from plastic coating and is hydrophilic, subject to kind of material, and stiffening layers of soft elastic material which are located between the outer layers and which are securely joined to one another to form an independent inner jacket which is disposed loosely in the outer jacket, characterized in that the outside surfaces of the inner jacket opposite the materially hydrophilic inside surfaces of the outer jacket are made hydrophilic.

2. Multipurpose mailing envelope according to claim 1, consisting of the combination of an outer jacket of paper stock and an inner jacket of plastic padding material located unattached therein, characterized in that the plastic padding material is made hydrophilic on its surface which forms the outside of the inner jacket.

3. Multipurpose mailing envelope according to claim 2, consisting of an air cushion sheet as the plastic padding material with its smooth surface forming the inside of the inner jacket and its tufted surface forming the outside of the inner jacket which is made hydrophilic.

4. Multipurpose mailing envelope according to claim 3, wherein only the outside surface of the tufted bottom is made hydrophilic.

5. Multipurpose mailing envelope according to Claim 2, wherein as the plastic material from which the inner jacket is formed there is used a foam sheet and its surface which forms the outside of the inner jacket is made hydrophilic.

6. Multipurpose mailing envelope according to claims 1 through 5, wherein even the surface of the material building the outer jacket which forms the inside of the outer jacket is made hydrophilic.

7. Multipurpose mailing envelope according to claims 1 through 6, wherein each hydrophilic surface is rendered hydrophilic by corona treatment.

8. Multipurpose mailing envelope according to claim 7, wherein said corona treatment is accompanied by the feeding of a gas mixuture consisting of nitrogen and glycol vapor.

## Revendications

1. Sachet d'envoi postal à usages multiples, composé d'un sachet extérieur formé de deux couches superposées en matière biodégradable reliées fixe par les grands côtés et par un côté transversal en tant qu'enveloppe extérieure, dont les surfaces intérieures ne sont pas enduites de matières plastiques et qui sont hydrophiles de par leur matière, et, disposées entre les couches extérieures, des couches de renforcement en matières plastiques souples qui sont reliées entre elles pour former une enveloppe intérieure indépendante qui est disposée amovible dans l'enveloppe extérieure, caractérisé en ce que les surfaces extérieures de l'enveloppe intérieure disposées contre les surfaces intérieures hydrophiles de par leur matière de l'enveloppe extérieure sont hydrophiles.

2. Sachet d'envoi postal à usages multiples selon la revendication 1, composé de la combinaison d'une enveloppe extérieure en papier et d'une enveloppe intérieure en rembourrage en matières plastiques disposée amovible dans la première, caractérisé en ce que le rembourrage en matières plastiques, sur son côté extérieur qui forme la surface de l'enveloppe intérieure, est hydrophile.

3. Sachet d'envoi postal à usages multiples selon la revendication 2, caractérisé en ce que le rembourrage en matières plastiques est formé d'un film à bulles dont la surface lisse forme le côté intérieur de l'enveloppe intérieure et dont les surfaces à bulles forment le côté extérieur de l'enveloppe intérieure qui est hydrophile.

4. Sachet d'envoi postal à usages multiples selon la revendication 3, caractérisé en ce que seule la surface extérieure des fonds à bulles est hydrophile.

5. Sachet d'envoi postal à usages multiples selon la revendication 2, caractérisé en ce que le rembourrage en matières plastiques dont est formée l'enveloppe intérieure est un film alvéolé dont la surface qui forme le côté extérieur de l'enveloppe intérieure est hydrophile.

6. Sachet d'envoi postal à usages multiples selon l'une des revendications 1 à 5, caractérisé en ce que le côté intérieur de l'enveloppe extérieure qui forme la surface de la matière de l'enveloppe extérieure est aussi hydrophile.

7. Sachet d'envoi postal à usages multiples selon l'une des revendications 1 à 6, caractérisé en ce que l'imperméabilisation des surfaces a été réalisée au moyen d'un traitement corona.

8. Sachet d'envoi postal à usages multiples selon la revendication 7, caractérisé en ce que l'imperméabilisation des surfaces a été réalisée par un traitement corona sous alimentation d'un mélange gazeux composé d'azote et de vapeurs de glycols.
